# EUROPEAN PATENT APPLICATION

(11) **EP 0 974 254 A1**
(43) Date of publication of application: **26.01.2000**
(21) Application number: 99202226.9
(22) Date of filing: 07.07.1999
(51) Int. Cl.: A01C 15/00, A01C 17/00

(54) **A closing member for an implement for metering material**

(30) Priority: 20.07.1998 NL 1009699
(71) Applicant: MAASLAND N.V., 3155 PD Maasland (NL)
(72) Inventor: De Geus, Marinus Antonius, 5311 BD Gameren (NL)
(74) Representative: Corten, Maurice Jean F.M.

(57) **Abstract**

An implement for metering material, such as liquid, granular and/or powdery material, which implement comprises at least one hopper (2) for the material to be metered, said hopper (2) being provided with at least one discharge opening (10, 11) with an associated first closing member by which the discharge opening (10, 11) can be opened to a greater or lesser extent, and with a second closing member (45) which is adapted to close the supply towards the discharge opening (10, 11).

## Description

The invention relates to an implement for metering material, such as liquid, granular and/or powdery material, which implement comprises at least one hopper for the material to be metered, said hopper being provided with at least one discharge opening with an associated first closing member by which the discharge opening can be opened to a greater or lesser extent, and a first adjusting mechanism for adjusting the size of the discharge opening.

Such an implement is known from document NL 9001380. With this implement it is desirable in practice to close one or more discharge openings, e.g. to prevent the material to be spread from landing on the field at a wrong place, or to remove a block from the discharge opening. However, in the aforementioned implement the spreader members are driven simultaneously by a coupled drive which also activates the agitators for the purpose of stimulating the flow of the material to be spread. When one of the discharge openings is closed by means of the adjusting member, this has the disadvantage that the drive of both the spreader member and the agitator is maintained. The disadvantageous result thereof is that the material to be spread is pulverized in the discharge member. Furthermore a mechanical uncoupling of the drive of the spreader members has the disadvantage of being an expensive solution.

The invention aims at providing an implement for metering material, in which one or more discharge openings can be closed and in which the above-mentioned drawbacks do not occur or are at least limited. For that purpose the implement defined in the preamble is characterized in that the hopper comprises at least one second closing member provided with at least one aperture and adapted to close the supply towards the discharge opening.

In a particular embodiment of the invention the second closing member is provided with a second adjusting mechanism. According to a further inventive feature, the second adjusting mechanism is provided with protective means, such as a protective hood, for example. According to another inventive feature, the second adjusting mechanism is provided with an operating member, such as an operating cylinder, for example.

In accordance with again another inventive feature, the second adjusting mechanism is remotely controlled. In an embodiment of the invention the second adjusting mechanism is controlled by hand. According to another inventive feature, the second adjusting mechanism is controlled automatically. The automatic control of the second adjusting mechanism cooperates with an electronic navigation system, such as Loran, global positioning system or dead reckoning.

According to a further aspect of the invention, the second closing member is spaced from the discharge opening. The volume of the space surrounded by the second closing member in closed condition and that part of the hopper in which the discharge opening is provided is substantially smaller than the volume of the hopper. According to another inventive feature, the volume of the space surrounded by the second closing member in closed condition and that part of the hopper in which the discharge opening is provided is approximately fifty times smaller than the volume of the hopper.

In an embodiment according to the invention, an electronic circuit automatically closes the second closing member, which circuit is activated by an input means, is connected with sensors measuring the discharge speed, driving time and instantaneous driving speed, and is constituted by an algorithm and a memory in which the parcel length and the instantaneous driving speed are stored. According to a further inventive feature, the electronic circuit cooperates with an electronic navigation system, such as Loran, global positioning system or dead reckoning, and is activated automatically.

In a further embodiment of the invention, the implement is provided with at least one guide member which is remotely activated and deactivated by means of an operating member. Such a guide member is described in NL-9200063 and all the details thereof are considered to be included in this application. According to a further inventive feature, the implement is provided with at least one guide member which is remotely activated and deactivated by means of an electronic circuit which is activated by an input means, is connected with sensors measuring the discharge speed, driving time and instantaneous driving speed, and is constituted by an algorithm and a memory in which the parcel length and the instantaneous driving speed are stored. According to another inventive feature, the implement is provided with at least one guide member which is remotely activated and deactivated by means of an electronic circuit cooperating with an electronic navigation system, such as Loran, global positioning system or dead reckoning, and is activated automatically.

In an embodiment according to the invention, the second closing member comprises at least two parts that are movable relative to each other. According to a further inventive feature, the movable parts of the second closing member comprise at least one portion provided with at least one aperture. According to a further inventive feature, at least one of the movable parts of the second closing member is round, e.g. has the shape of a circle or a disc. According to another inventive feature, at least one of the movable parts of the second closing member is rotatable. According to again another inventive feature, at least one of the movable parts of the second closing member is provided with at least one positioning means for positioning one or more apertures. According to a further inventive feature, the position of at least one of the movable parts of the closing member is limited by a stop. According to another inventive feature, at least one of the movable parts of the closing member fits the circumference of the hopper. According to a further inventive feature, at least one of the movable parts of the second closing member comprises means achieving a proper fitting of the second closing member to the hopper, e.g. because one of the movable parts is provided with a flexible edge. According to a further inventive feature, at least one of the movable parts of the second closing member is connected with the second adjusting mechanism.

In an embodiment according to the invention, the second closing member is rigidly connected with the implement. According to another inventive feature, the second adjusting mechanism comprises an adjustable clamp connection. According to again another inventive, at least one of the parts comprises a synthetic portion. This reduces the resistance between the movable parts.

In an embodiment of the invention, at least one hopper comprises a second closing member, one or more hoppers being provided with a bottom plate provided with at least one aperture. According to a further inventive feature, as regards its shape and orientation relative to the discharge opening, the bottom plate is identical to the second closing member in opened condition.

For a better understanding of the invention and to show how the same may be carried into effect, reference will now be made, by way of example, to the accompanying drawings of an embodiment in accordance with the invention, in which drawings:
Figure 1 is a side view of an implement in accordance with the invention;
Figure 2 is a front view of the implement of Figure 1, taken in the direction of the arrow II in Figure 1;
Figure 3 shows, to an enlarged scale, a portion of the implement of Figure 1, taken on the line III - III in Figure 1;
Figure 4 is a side view of the portion shown in Figure 3, according to the arrow IV in Figure 3;
Figure 5 shows, to an enlarged scale, a portion of the adjusting member shown in the side view of Figure 1, a computer coupled to the adjusting member also being shown;
Figure 6 is a side view of a portion of the hopper provided with a second closing member;
Figure 7 is a plan view of the second closing member shown in Figure 6;
Figure 8 is a side view of a portion of the hopper provided with a second closing member according to another embodiment of the invention;
Figure 9 is a plan view of the second closing member shown in Figure 8;
Figure 10 shows to an enlarged scale a portion of the second closing member of Figure 8;
Figure 11 shows, in plan view, the implement provided with a guide member for the material to be spread, and
Figure 12 is a plan view of the implement of Figure 2, the hopper being provided with a second closing member and a bottom plate.

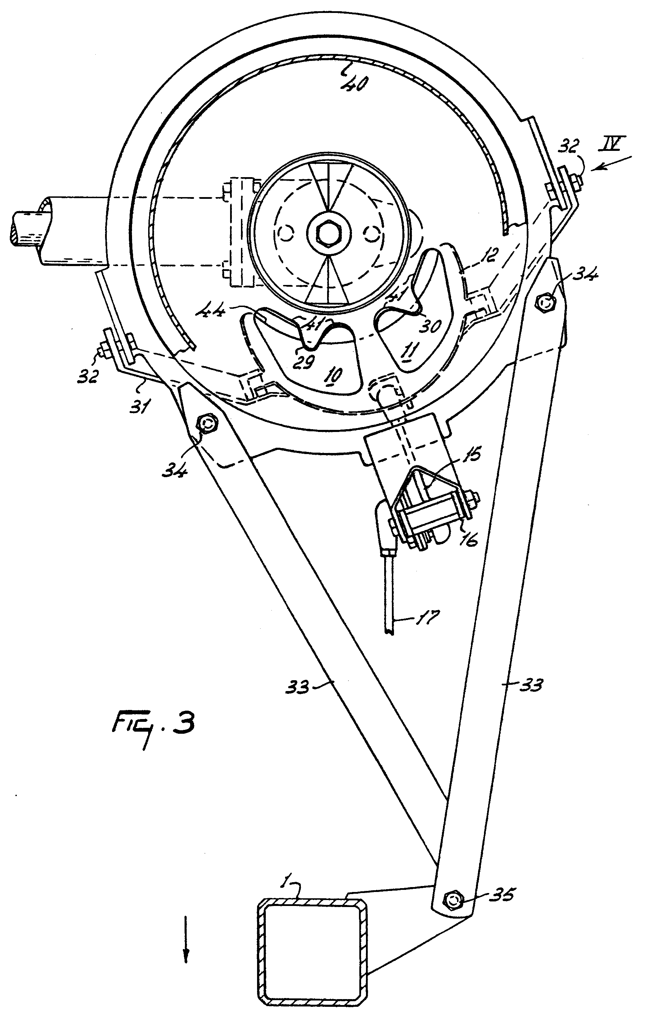

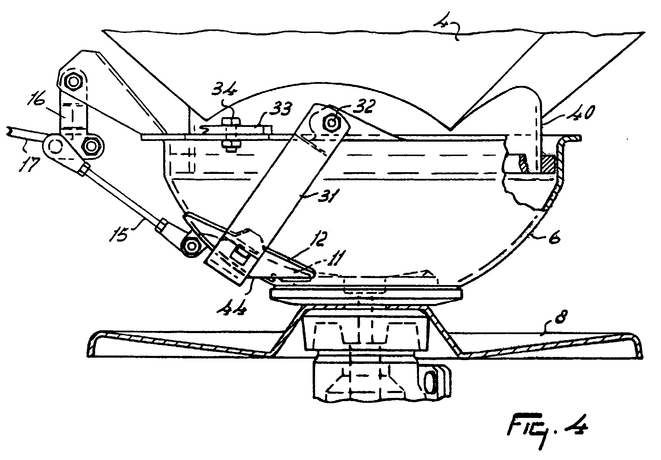

In the embodiment, the implement in accordance with the invention is shown as a spreader which, during operation, can be moved over the field and is used in particular for spreading material over agricultural fields. The implement comprises a frame 1 having attached thereto a hopper 2. The hopper 2 includes two discharge nozzles 3 and 4. The lower ends of the discharge nozzles are fitted with discharge members 5 and 6, respectively, which are identical to each other but are of a symmetrical shape with respect to the centre plane of the implement. The discharge member 6 is shown in greater detail in Figures 3 and 4. Respective spreader members 7 and 8 are provided under each of the discharge members 5 and 6. These spreader members 7 and 8 are also designed and disposed symmetrically relative to the centre plane. The spreader members 7 and 8 are provided in the implement capably of rotation about upwardly extending axes of rotation. The hopper 2 and the spreader members 7 and 8 are supported by the frame 1 which is provided with coupling members 9 by means of which the implement can be coupled to the lifting hitch of a tractor or a similar vehicle.

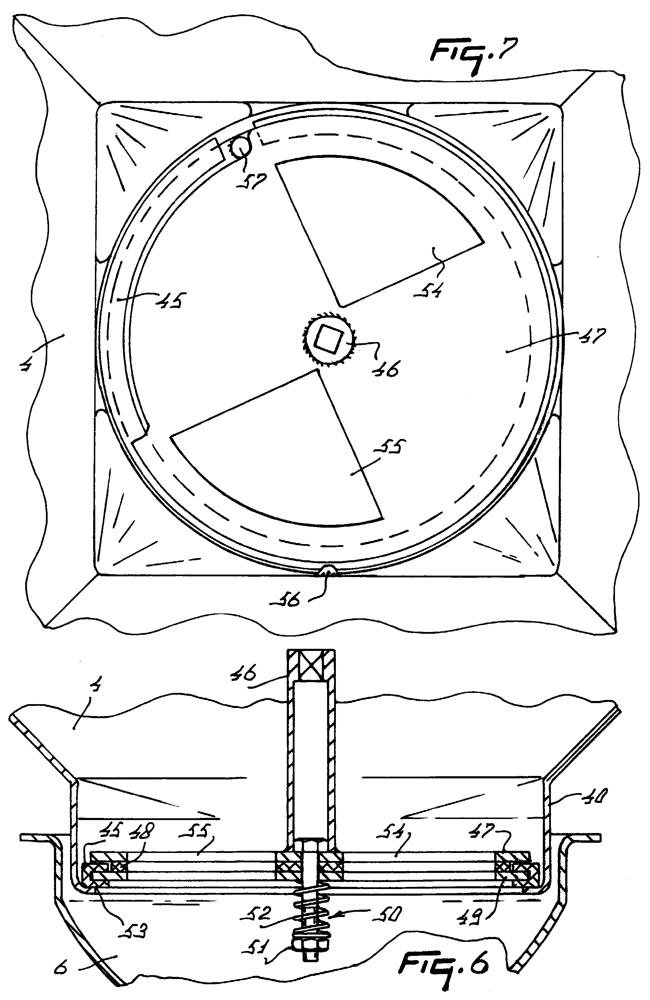

As is shown in Figure 3 for the discharge member 5, each of the discharge members 5 and 6 has two discharge openings 10 and 11. Against the outside of each of the discharge members 5 and 6 there is arranged a first closing member in the form of a dosing slide 12 by means of which the discharge openings 10 and 11 of the relevant discharge member can optionally be closed to a greater or lesser extent. By means of a coupling member 13 consisting of pivotably interconnected rods or arms which are also arranged pivotably with respect to the frame, the dosing slide 12 is coupled to an adjusting member 14 which is shown in further detail in Figure 5.

The coupling member 13 includes a coupling arm 15, the one end of which is connected pivotably to the dosing slide 12 and the other end is connected pivotably to a coupling arm 17 via an arm 16. The arm 16 is arranged pivotably at a support secured to the upper side of the discharge member 6. The coupling arm 17 is connected pivotably to an arm 18 which is fitted to a horizontal shaft 19. The shaft 19 is provided on the frame in such a manner so as to be pivotable about its longitudinal axis. The adjusting member 14 has one end connected via a horizontal pivot shaft 21 to an arm 20, which is fitted on the horizontal shaft 19. The other end of the adjusting member 14 is connected to the frame 1 by means of a horizontal pivot shaft 22. A clamping member 42 rigidly couples the pivot shaft 22 to a frame beam of the frame 1. The pivot shaft 22 is movable along the frame beam by means of the clamping member 42. To allow this displacement, the clamping member can be loosened from the frame beam, be shifted relative thereto and thereafter be tightened again. The adjusting member 14 can be controlled by means of a computer 23. To that end, the adjusting member is connected to the computer 23 via a, preferably, flexible cable connection 43.

At the end of the horizontal shaft 19 there is arranged an arm 24. The end of the arm 24 is located in a slotted aperture formed between a plate 25 attached to the frame 1 and a guide strip 26 which is spaced from the plate and connected thereto. Apertures 27, which are in alignment, have been made in the plate 25 and in the strip 26. A stop pin 28 can optionally be passed through one of the apertures 27 in the plate 25 and in the strip 26. The stop pin 28 constitutes an adjustable stop for the arm 24.

The discharge members 5 and 6 are of a bowl-shaped design, as is shown in particular in Figure 4. The discharge members 5 and 6 have their upper ends arranged with some clearance about the cylindrical lower ends 40 of the discharge members 5 and 6. Seen in plan view (Figure 3), the bottom edges 41 of the discharge openings 10 and 11 are positioned on a tongue 29 and 30, respectively, which extends concentrically and upwardly (away from the shaft of the first discharge member). The dosing slide 12 is slightly larger than the total surface area through which the discharge openings 10 and 11 extend. Consequently, the dosing slide can cover the two discharge openings 10 and 11 in the desired manner to a greater or lesser extent. The dosing slide 12 is coupled in such a manner to a bracket 31 that it is movable in a slightly flexible manner. The ends of the bracket 31 are provided capably of rotation about aligned pivot shafts 32 which are mounted on the upper edge of the discharge member 6.

The discharge members 5 and 6 are kept in position around the lower ends 40 of the discharge nozzles by means of strips 33. The strips 33 have one end bolted by means of bolts 34 to the upper edge of the discharge members 5, 6 and the other end to the frame 1 by means of bolts 35.

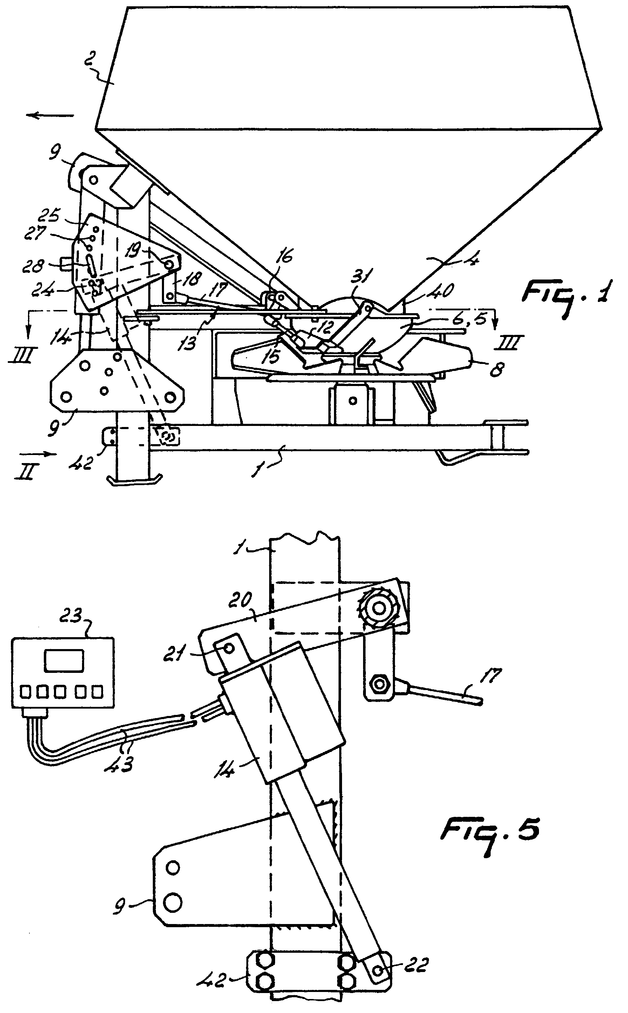

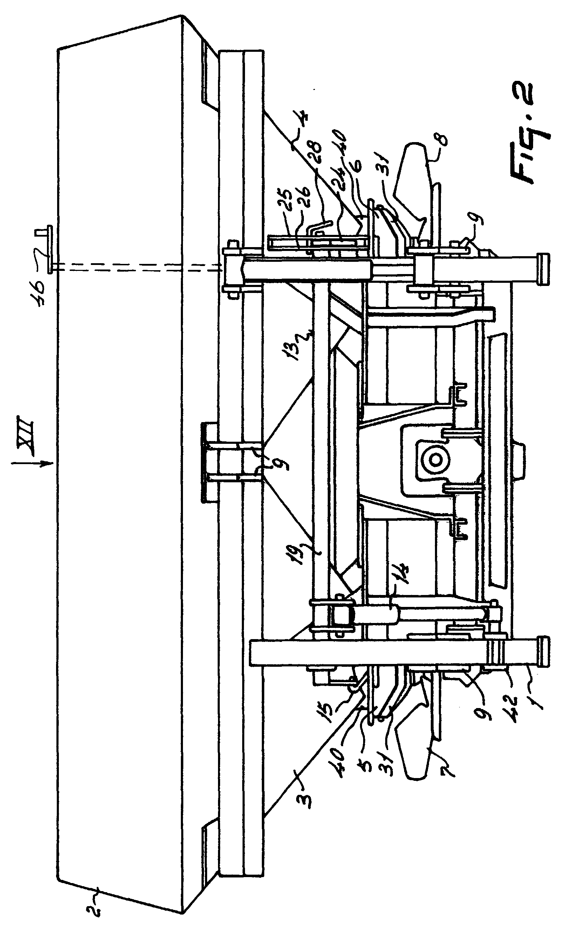

During operation, the implement shown in Figures 1 to 5 is moved in order to spread material over a surface area to be provided with material. During travel, material is spread over a strip of soil of a predetermined width. The implement is particularly suitable for spreading material over agricultural fields. One usually wants to distribute the material to be spread, such as fertilizer, in a predetermined quantity per surface unit over the surface area to be spread. To achieve this, depending on the width over which the material is spread and depending on the driving speed of the implement over the surface, the material is supplied in a given quantity per unit of time from the hopper 2 via the discharge openings 10 and 11 to the spreader members 7 and 8. So as to be able to discharge the material during operation in the desired quantity per unit of time from the hopper 2 via the discharge openings 10 and 11, the free size of passage of the discharge openings 10 and 11 can be set by means of the dosing slide 12. The quantity of material to be spread per surface unit may vary because of e.g. the soil and/or crop conditions, the type of material to be spread, or because of further circumstances.

In order to obtain a desired size of passage, the dosing slide 12 has to be adjusted to the proper position relative to the discharge openings, which position must be in relation to the position of the arm 24 relative to the plate 25. To that end, prior to the spreading of the material, the proper setting of the dosing slide 12 relative to the discharge openings 10 and 11 and that of the stop arm 24 along the plate 25 must be determined. During this adjusting operation, the adjusting member 14 is uncoupled from the arm 20. To accomplish this setting, the stop pin 28 is inserted through a predetermined aperture 27 (as specified in the manual issued by the manufacturer). Subsequently, the stop arm 24 is placed against the stop pin 28. In the embodiment, the dosing slide 12 must then be in such a position that its lower edge coincides exactly with the tips of the tongues 29 and 30. If this is not the case, it can as yet be obtained by adjusting the length of the relevant length-adjustable arm 15, and/or that of the arms 18. Moreover, the dosing slide 12 can be moved, by adjustment of the bolt shafts 32 around the axis of the discharge member 6, in order to achieve a correct position relative to the discharge openings 10 and 11.

Thereafter, the adjusting member 14 can be coupled to the arm 20. However, before doing so, the adjusting member must be set to a zero-position. The zero-position is a position wherein the length-adjustable adjusting member has its shortest length. In the embodiment, the adjusting member is an electrically controllable member, which adjusting member includes a cylindrical housing wherein a rod can be moved longitudinally by means of an electric motor constituting part of the adjusting member. This zero position can be obtained by means of a signal supplied by the computer 23, for which an operator must give a command to the computer 23. This signal from the computer starts the electric motor, i.e. in such a manner that the rod is withdrawn as far as possible into the housing, so that the adjusting member 14 gets its shortest length. The duration of driving the rod by the electric motor has been chosen such that a maximum withdrawal of the rod into the housing is ensured. The adjusting member includes a potentiometer which in cooperation with the rod is set to the zero position when the rod is in the zero position. By recording the data in the computer 23, the zero position of the adjusting member is laid down. Thereafter, the adjusting member 14 can be coupled to the arm 20.

The arm 20 must previously have been adjusted to its zero position. This zero position corresponds to the position of the dosing slide relative to the discharge openings, i.e. in such a manner that the discharge openings are closed completely. In case it should appear that the end of the adjusting member 14 to be coupled to the arm 20 is located near the arm 20, then the length of the adjusting member 14 can be adjusted slightly and/or the clamping member 42 can be adjusted with respect to the frame beam. When the adjusting member 14 has been connected to the arm 20, then this action can be confirmed by pressing a key of the computer 23.

In the memory of the computer 23 there is present a program which checks whether the mechanical graduation constituted by the apertures 27 in the plate 25 agrees with the graduation stored in the computer. The extreme values of these graduations correspond to the positions wherein the dosing slide 12 fully closes, respectively fully opens, the discharge openings 10 and 11. In order to check whether the mechanical graduation agrees with the graduation stored in the computer memory, the stop pin 28 must be inserted into a specific one of the apertures 27 of the graduation on the implement, which specific aperture was displayed by the computer 23. The stop arm 24 must be moved to the stop pin 28 by an operator operating the computer keyboard. As soon as the stop pin 28 has been reached, the operator must press a key of the computer 23, in response to which the position of the stop arm 24 is stored in the memory of the computer 23. Thereafter, following the instruction displayed by the computer, the stop pin 28 must be inserted into a specific one of the apertures 27. The stop arm 24 must then again be moved up to the stop pin 28 by the operator and thereafter, by pressing a key of the computer keyboard, this position is stored in the memory of the computer 23. In the said last position of the stop pin 28, the discharge openings 10 and 11 are opened to their full extent.

With a view to the play in the first adjusting mechanism, caused inter alia by a fit which is not 100% accurate or wear of e.g. the coupling points of the coupling arms 15, 17, it is important that the reference points constituted by the stop pin 28 are always approached from the same direction of movement. In the above-described procedure, this means that the adjusting member 14 is adjusted from its fully withdrawn position into the direction of its fully extended position. Any possible play in the first adjusting mechanism is compensated for during the initial adjustment of the adjusting member 14, in the sense that the rod of the adjusting member 14 is moved out by the electric motor associated with the adjusting member 14, as a consequence of which the clearance in the first adjusting mechanism is "pushed away" in the initial part of this outward movement of the rod, so that, on reaching the first reference point and subsequent adjustment again of the adjusting member, the play does no longer affect the setting of the dosing slide 12 in the initial direction of movement of the adjusting member rod.

The computer 23 calculates a ratio from the two reference points formed by the stop pin 28. Using the calculated ratio, the graduation stored in the computer 23 is adapted to the mechanically adjustable graduation provided on the implement.

When the implement is operative, a predetermined dose of material must be distributed as uniformly as possible. The mass flow to be realized in this connection depends inter alia on the driving speed of the implement. A driving speed-dependent metering can be effected by means of the computer 23 and the adjusting member 14. This means that, with a higher driving speed, the dosing aperture must be increased automatically. When the driving speed is lower, the dosing aperture must be decreased. The relation between the mass flow from the discharge openings 10 and 11, respectively, and the extent to which the dosing slide covers the discharge openings 10 and 11, is stored in the memory of the computer 23. This relation corresponds to the apertures 27 provided in the plate 25, which likewise correspond to a given mass flow from the discharge openings 10 and 11.

A change in the mass flow requires an adjustment of the arm 20 through a certain angle by means of the adjusting member 14. The length of the adjusting member 14 then increases (the spindle moves outwardly) or decreases (the spindle moves inwardly). In the case that the spindle is moved outwardly, this means for the embodiment that the adjusting member 14 is moved in the calibration direction and, consequently, that at that moment the play does not affect the first adjusting mechanism and, concurrently, the setting of the dosing slide relative to the discharge openings 10 and 11. When the spindle moves inwardly, due to play in the first adjusting mechanism, the initial movement of the arm 20 will not result in a displacement of the dosing slide 12. Not until after the play has been bridged by the spindle, the coupling member 13 will transfer the spindle adjustment to the dosing slide 12, resulting in a change in the mass flow. This would mean that, should the play not previously have been taken into account, the desired dosing slide setting will not be achieved and the dosing slide will then lag behind the adjusting member, which has for its consequence that the discharge openings 10 and 11 will not be closed to a sufficient extent by the dosing slide 12. In order to prevent this, in this embodiment a value representing the maximum allowable play is stored in the memory of the computer 23. The maximum allowable play can be determined by checking, in actual practice, the amount of play in the first adjusting mechanism after a given number of operating hours of the implement. It is, of course, also possible to store in the computer memory the relation between the number of operating hours and the anticipated play in the first adjusting mechanism. This renders it possible to adapt the maximum allowable play according as the number of operating hours increases. In the implement of the above-described type, this value amounts to approximately 5 mm. When the adjusting member 14 is adjusted, this value, when the spindle is withdrawn, will be added to the path to be covered by the adjusting member and ensuring from the desired setting. Depending on the play in the first adjusting mechanism, the dosing slide will at that instant close the discharge openings 10 and 11 slightly too far. The computer 23 now causes the length of the adjusting member 14 to increase, i.e. the spindle must now be moved outwardly through 5 mm, the maximum allowable play. The result will be that the initial movement of the spindle will not have any influence on the setting of the dosing slide 12, the play in the first adjusting mechanism being the cause thereof, albeit now in the other direction. The last part of the movement of the spindle results in a play-free drive of the dosing slide 12 by the first adjusting mechanism which can thus adjust the desired mass flow. Since the adjustment by means of the closing member occurs rather quickly, the desired setting is obtained rapidly and a slight over-closure of the dosing aperture will hardly have any influence on the desired mass flow.

It will be obvious that a setting of the desired size of the discharge opening achieved in the above-described manner can alternatively be achieved by manual adjustment of the arm 20. For that purpose there might be present on the arm 20 an indication representing the maximum allowable play. It will then not be possible to adjust the desired size of the discharge opening with such a great accuracy, ease of operation and speed as with the computer-controlled adjusting member 14.

Figure 6 is a side view of the hopper 2 with a discharge member 5 or 6 which is provided with a second closing member 45. The second closing member 45 comprises a second adjusting mechanism 46. The second closing member 45 is constituted by movable parts 47, 48, 49 which are designed in this embodiment as circular discs. The second adjusting mechanism is connected with the disc 47 by means of a clamp connection 50 which is constituted in this embodiment by a bolt with nut 51 and a spring 52. The discs are rotatable around this clamp connection 50. One or more of the discs, e.g. disc 48, can be made of a material, such as a synthetic material, for example, that reduces the friction between the discs. One of the discs can be provided with means 53 ensuring its fitting to the circumference of the hopper 2, e.g. a rubber edge, a brush or a strip.

Figure 7 is a plan view of Figure 6. In the embodiment the upper disc 47 is provided with two apertures 54 and 55. On the inside of the hopper 2 there is disposed a positioning means 56 constituted by a projection cooperating with a recess in the disc 49. Furthermore there is disposed a stop 57 on the disc 48, which stop 57 constitutes a limit for the rotation of the discs relative to each other. The second adjusting mechanism 46 can be operated both by hand and by automatic remote control. In an embodiment of the invention, the second adjusting mechanism can be operated by a long rod which is inserted in the aperture 40.

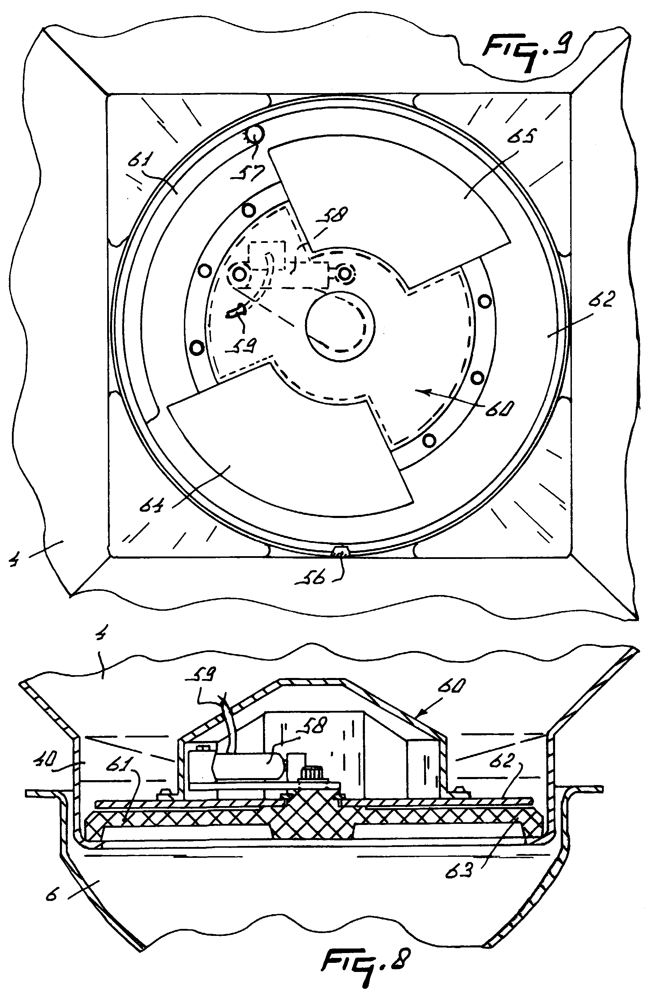

Figure 8 is a side view of another embodiment of the second closing member according to the invention, in which the second closing member 61 is provided with a second adjusting mechanism comprising an operating member 59 which is provided with a cylinder 58 that can be remotely controlled. Furthermore the second closing member 61 is provided with protective means which comprise in the present embodiment a protective hood 60. In this situation the second closing member is constituted by two movable parts 62 and 63 which are also designed as discs.

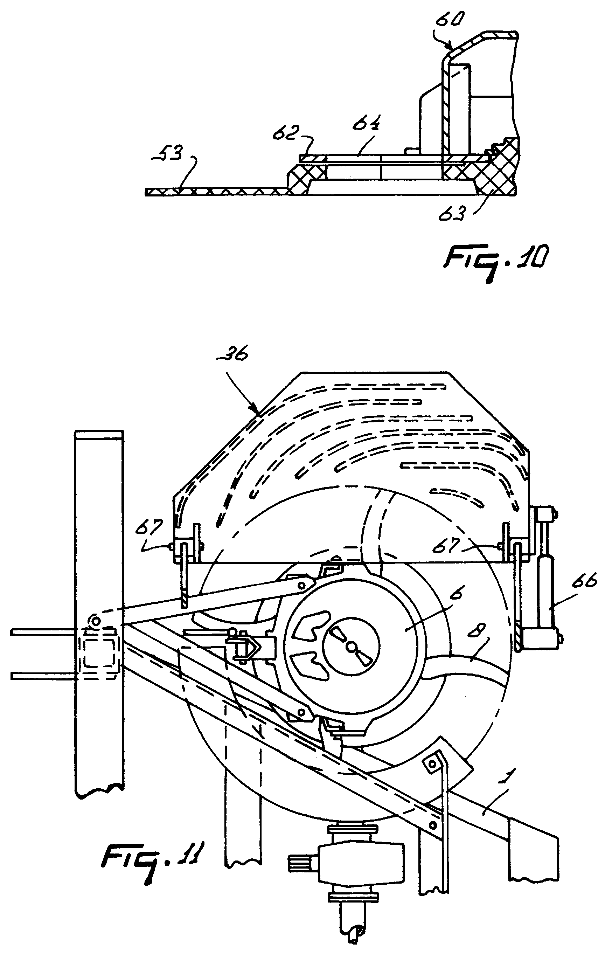

Figure 9 is a plan view of Figure 8. The upper disc is provided with two apertures 64 and 65, a positioning means 56 and a stop 57. The second adjusting mechanism of the second closing member can be operated automatically and remotely. This is possible by means of an electronic circuit which is activated at a given point on the field. The point in time when the second closing member can be closed is calculated by means of an algorithm and data stored in a memory regarding the parcel length, the instantaneous driving speed, the driving time and the outflow velocity. The second closing member having been closed, the remaining material is spread from the discharge member 5 or 6, whereafter no more material leaves the discharge opening 10 or 11. The electronic circuit can cooperate with an electronic navigation system, such as Loran, global positioning system or dead reckoning, so that the second closing member is activated fully automatically.

Figure 10 shows to an enlarged scale a detail of Figure 8. The protective hood 60 is shown together with the movable parts 62 and 63. In this embodiment there is provided a movable part 63 achieving a fitting 53 of the second closing member to the hopper. In this situation the fitting consists of extra material, e.g. synthetic material, steel or rubber, which can be made to size, so as to fit the circumference of the hopper 2.

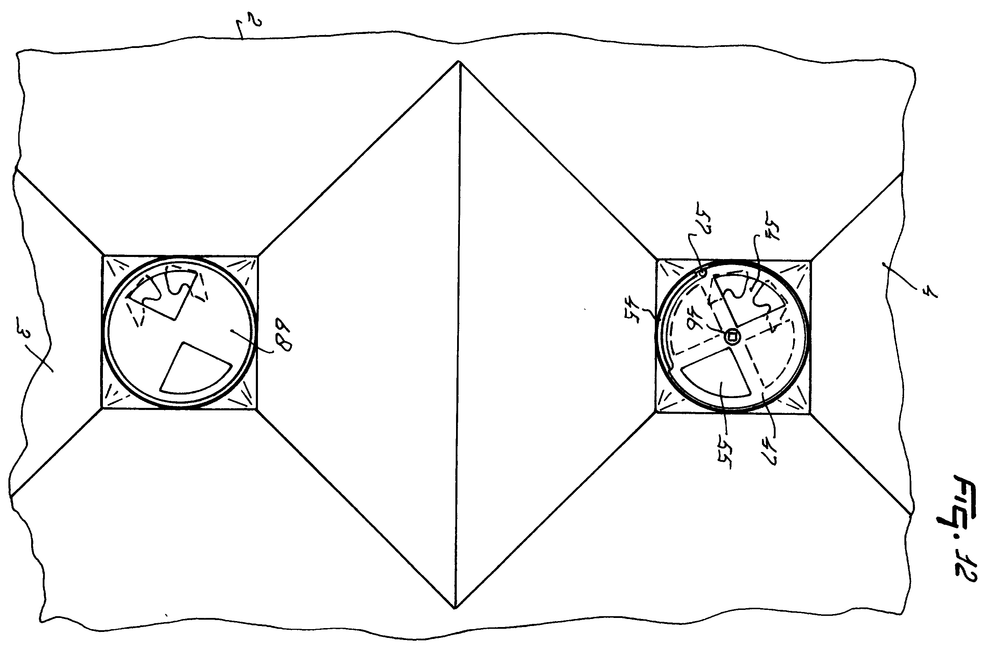

Figure 11 is a plan view of a discharge member 6 provided with a spreader member 8 and a guide member 36, the latter being provided with an operating cylinder 66 and a hinge 67. In the present embodiment the guide member is remotely activated and deactivated. This can take place by means of an electronic circuit, which electronic circuit is activated by an input means, is connected with sensors measuring the discharge speed, driving time and instantaneous driving speed, and is constituted by an algorithm and a memory in which the parcel length and the instantaneous driving speed are stored. The guide member 36 can also be activated and deactivated by means of an electronic circuit cooperating with an electronic navigation system, such as Loran, global positioning system or dead reckoning. This has the advantage that, the second closing member having been closed, the material present in the discharge member 5 is spread on time by the spreader member 8.

Figure 12 is a plan view of the hopper 2 which, in the present embodiment, is provided with a bottom plate 68 and a second closing member 45, which bottom plate 68, as regards its shape and orientation relative to the discharge opening, is identical to a second closing member in opened condition. In this manner it is achieved that the material to be spread is supplied to the discharge openings 10 and 11 in an identical manner.

The invention is not limited to the features described in the foregoing, but also relates to all the features shown in the accompanying drawings.

## Claims

1. An implement for metering material, such as liquid, granular and/or powdery material, which implement comprises at least one hopper (2) for the material to be metered, said hopper (2) being provided with at least one discharge opening (10, 11) with an associated first closing member by which the discharge opening (10, 11) can be opened to a greater or lesser extent, and a first adjusting mechanism for adjusting the size of the discharge opening (10, 11), characterized in that the hopper (2) comprises at least one second closing member (45) provided with at least one aperture (54, 55) and adapted to close the supply towards the discharge opening (10, 11).

2. An implement as claimed in claim 1, characterized in that the second closing member (45) is provided with a second adjusting mechanism (46).

3. An implement as claimed in claim 1 or 2, characterized in that the second adjusting mechanism (46) is provided with protective means.

4. An implement as claimed in any one of claims 1 - 3, characterized in that the second adjusting mechanism (46) is provided with an operating member (59), such as an operating cylinder (58), for example.

5. An implement as claimed in any one of claims 1 - 4, characterized in that the second adjusting mechanism (46) is remotely controlled.

6. An implement as claimed in any one of claims 1 - 5, characterized in that the second adjusting mechanism (46) is controlled by hand.

7. An implement as claimed in any one of claims 1 - 5, characterized in that the second adjusting mechanism (46) is controlled automatically.

8. An implement as claimed in claim 7, characterized in that the automatic control of the second adjusting mechanism (46) cooperates with an electronic navigation system, such as Loran, global positioning system or dead reckoning.

9. An implement as claimed in any one of the preceding claims, characterized in that the second closing member (45) is spaced from the discharge opening (10, 11).

10. An implement as claimed in claim 9, characterized in that the volume of the space surrounded by the second closing member (45) in closed condition and that part of the hopper (2) in which the discharge opening (10, 11) is provided is substantially smaller than the volume of the hopper (2).

11. An implement as claimed in claim 10, characterized in that the volume of the space surrounded by the second closing member (45) in closed condition and that part of the hopper (2) in which the discharge opening is provided is approximately fifty times smaller than the volume of the hopper (2).

12. An implement as claimed in any one of claims 9 - 11, characterized in that an electronic circuit automatically closes the second closing member (45), which circuit is activated by an input means, is connected with sensors measuring the discharge speed, driving time and instantaneous driving speed, and is constituted by an algorithm and a memory in which the parcel length and the instantaneous driving speed are stored.

13. An implement as claimed in claim 12, characterized in that the electronic circuit cooperates with an electronic navigation system, such as Loran, global positioning system or dead reckoning, and is activated automatically.

14. An implement as claimed in any one of claims 9 - 13, characterized in that the implement is provided with at least one guide member (36) which is remotely activated and deactivated by means of an operating member.

15. An implement as claimed in any one of claims 9 - 14, characterized in that the implement is provided with at least one guide member (36) which is remotely activated and deactivated by means of an electronic circuit which automatically closes the second closing member (45), which circuit is activated by an input means, is connected with sensors measuring the discharge speed, driving time and instantaneous driving speed, and is constituted by an algorithm and a memory in which the parcel length and the instantaneous driving speed are stored.

16. An implement as claimed in any one of claims 9 - 15, characterized in that the implement is provided with at least one guide member (36) which is remotely activated and deactivated by means of an electronic circuit cooperating with an electronic navigation system, such as Loran, global positioning system or dead reckoning, and is activated automatically.

17. An implement as claimed in any one of the preceding claims, characterized in that the second closing member (45) comprises at least two parts (47, 49) that are movable relative to each other.

18. An implement as claimed in claim 17, characterized in that the movable parts (47, 49) of the second closing member (45) comprise at least one portion (47, 49) provided with at least one aperture (54, 55).

19. An implement as claimed in any one of claims 17 - 18, characterized in that at least one of the movable parts (47, 49) of the second closing member (45) is round.

20. An implement as claimed in any one of claims 17 - 19, characterized in that at least one of the movable parts (47, 49) of the second closing member (45) is rotatable.

21. An implement as claimed in any one of claims 17 - 20, characterized in that at least one of the movable parts (47, 49) of the second closing member (45) is provided with at least one positioning means (56) for positioning one or more apertures (54, 55).

22. An implement as claimed in any one of claims 17 - 21, characterized in that the position of at least one of the movable parts (47, 49) of the second closing member (45) is limited by a stop.

23. An implement as claimed in any one of claims 17 - 22, characterized in that at least one of the movable parts (47, 49) of the second closing member (45) fits the circumference of the hopper (2).

24. An implement as claimed in claim 23, characterized in that at least one of the movable parts of the second closing member (45) comprises means achieving a proper fitting of the second closing member to the hopper (2).

25. An implement as claimed in any one of claims 17 - 24, characterized in that at least one of the movable parts (47, 49) of the second closing member (45) is connected with the second adjusting mechanism (46).

26. An implement as claimed in any one of the preceding claims, characterized in that the second closing member (45) is rigidly connected with the implement.

27. An implement as claimed in any one of the preceding claims, characterized in that the second adjusting mechanism (46) comprises an adjustable clamp connection (50).

28. An implement as claimed in any one of claims 17 - 27, characterized in that at least one of the parts comprises a synthetic portion (48).

29. An implement as claimed in any one of the preceding claims, characterized in that at least one hopper (2) is provided with a second closing member (45), one or more hoppers (2) being provided with a bottom plate (68) provided with at least one aperture (64, 65).

30. An implement as claimed in claim 25, characterized in that, as regards its shape and orientation relative to the discharge opening (10, 11), the bottom plate (68) is identical to the second closing member (45) in opened condition.

31. A second closing member (45) as described in the preceding claims and adapted to be applied in an implement as described in the preceding claims.

32. A bottom plate (68) as described in one of the preceding claims 29 - 30, which bottom plate (68) is suitable for being applied in conjunction with a second closing member (45) and for being applied in an implement as described in the preceding claims.
